# EUROPEAN PATENT APPLICATION

(11) **EP 4 631 363 A1**
(43) Date of publication of application: **15.10.2025**
(21) Application number: 23916280.3
(22) Date of filing: 25.12.2023
(51) Int. Cl.: A23L 27/00

(54) **AGENT FOR ENHANCING SPICINESS**

(30) Priority: 13.01.2023 JP 2023003799
(71) Applicant: Nagase Viita Co., Ltd., Okayama-shi, Okayama 702-8006 (JP)
(72) Inventor: SAEKI Mizuki, Okayama-shi Okayama 702-8006 (JP); TAKAHASHI Jun, Okayama-shi Okayama 702-8006 (JP); IKEGAMI Shoji, Okayama-shi Okayama 702-8006 (JP); TORAYA Terumasa, Okayama-shi Okayama 702-8006 (JP); ITO Michie, Okayama-shi Okayama 702-8006 (JP)
(74) Representative: Page White Farrer
(86) International application number: PCT/JP2023/046521
(87) International publication number: WO 2024/150667

(57) **Abstract**

One of the objectives is to provide a means for enhancing the sensory attributes of culinary botanicals. The present invention attains the object by providing an agent for enhancing a sensory attribute of a culinary botanical, comprising a glycosyl naringenin.

## Description

### Technical Field

The present invention relates to an agent for improving a sensory attribute of a culinary botanical and its uses.

### Background Art

Culinary botanicals are used in diverse cuisines around the world. They are utilized to enrich people's dietary experiences through various aspects including enhancing pungency, spiciness, color, aroma, flavor, preservation, and the like. In Japan, culinary botanicals such as *wasabi* (Japanese horseradish), ginger, *sansho* (Japanese pepper), and *shiso* (*Perilla frutescens var. crispa*) have been used since ancient times. In recent years, curry rice has come to be recognized as one of national dishes. In addition to these, it is well known that dishes containing culinary botanicals, such as Chinese, Korean, Indian, and Turkish cuisines, are highly favored and extremely popular.

As described above, the unique sensory attributes imparted by culinary botanicals are highly favored and popular around the world. However, it is well known that culinary botanicals are generally expensive and their raw material costs are relatively high. In addition, their production area is concentrated in specific regions mainly near subtropical and tropical zones. Furthermore, issues in food supply caused by population growth also exists. Taking these factors into account, there may be difficulties in ensuring the sustainable and stable supply of culinary botanicals. If the distinctive sensory attributes imparted by culinary botanicals can be enhanced, it would have significant industrial value.

In this context, various approaches have been proposed to enhance the sensory attributes imparted by culinary botanicals. For example, Patent Literature 1 discloses that an extract of *yamamomo (Myrica rubra)* enhances the pungency of culinary botanicals belonging to the genus *Zanthoxylum.* In Patent Literature 2, a fermented seasoning composition comprising a soy milk fermentation product produced by lactic acid bacteria and yeast (a lactic acid bacteria/yeast fermentation product) is disclosed, and it is described that it can be used for enhancing the pungency imparted by culinary botanicals. In Patent Literature 3, a seasoning composition comprising methionol, 2-phenylethanol, and a protein degradation product that does not contain fractions with a molecular weight exceeding 30,000 is disclosed, and it is described that the composition can enhance sensory attributes of culinary botanicals such as spiciness. Patent Literature 4 discloses that an emulsified flavor composition containing menthol enhances the spiciness of *wasabi.*

On the other hand, glycosyl naringenin is a glycoside of naringenin, a type of flavanone. Glycosyl naringenin has attracted attention as a food material with various physiological functions, such as appetite regulation effects, antistress effects, and anti-obesity properties, as exemplified by naringin, a type of glycosyl naringenin. However, it remains entirely unknown what effect glycosyl naringenin has on the sensory attributes of culinary botanicals or foods and beverages containing culinary botanicals.

### Citation List

### Patent Literature

[Patent Literature 1] Japanese Patent Application Publication No. 2021-078416
[Patent Literature 2] Japanese Patent Application Publication No. 2020-078340
[Patent Literature 3] Japanese Patent Application Publication No. 2016-189716
[Patent Literature 4] Japanese Patent Application Publication No. 2011-019457

### Summary of Invention

### Technical Problem

The present invention has been made in view of the issues in the above-described prior art, and one of its objectives is to provide a means for enhancing the sensory attributes imparted by culinary botanicals.

### Solution to Problem

The present inventors accumulated research effort with the aim of solving the above-described technical problem and surprisingly found that, when various culinary botanicals, such as black pepper, Sichuan pepper (*huajiao*), star anise, turmeric, and red pepper, or foods and beverages containing these culinary botanicals were consumed together with glycosyl naringenin, the sensory attributes characteristic of the culinary botanicals were perceived more strongly and persistently and the distinctive flavor characteristic of the culinary botanicals were improved.

Accordingly, in one aspect, the present invention solves the above-described technical problem by providing an agent for enhancing a sensory attribute of a culinary botanical, comprising glycosyl naringenin.

### Technical Effect

By the agent for enhancing a sensory attribute of a culinary botanical comprising a glycosyl naringenin in accordance with one aspect of the present invention, a sensory attribute of a culinary botanical can be enhanced.

### Brief Description of Drawings

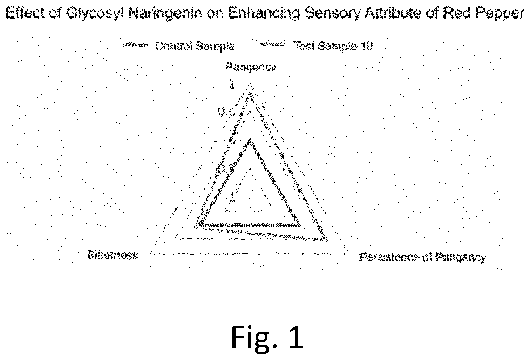

[Fig. 1] Radar chart showing the results of sensory evaluation of an aqueous extract of red pepper (test sample 10) containing a glycosyl naringenin mixture (product name: NARINVID^{™}; manufactured by Hayashibara Co., Ltd.) comprising of 3"-α-monoglucosyl naringin and naringin, and an aqueous extract of red pepper not containing the glycosyl naringenin mixture (control sample).

### Description of Embodiments

### <An agent for enhancing a sensory attribute of a culinary botanical>

A detailed description of the agent for enhancing a sensory attribute of a culinary botanical in accordance with one aspect of the present invention is provided below.

The agent for enhancing a sensory attribute of a culinary botanical in accordance with one aspect of the present invention comprises a glycosyl naringenin. The term "glycosyl naringenin" is a generic term for glycosides having naringenin (Chemical Formula 1), a type of flavanone, as their aglycone.

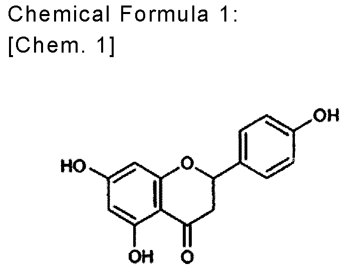

"Glycosyl naringenin" encompasses, for example, "naringin" (Chemical Formula 2), which has a structure where a neohesperidose (α-rhamnosyl (1→2)glucose) residue is bound via a β-glycosidic linkage to the C(7) hydroxyl group of naringenin; "prunin" (Chemical Formula 3), which has a structure where β-glucose is bound to the C(7) hydroxyl group of naringenin; and "narirutin" (Chemical Formula 4), which has a structure where a rutinose (α-rhamnosyl (1→6) glucose) residue is bound via a β-glycosidic linkage to the C(7) hydroxyl group of naringenin. It has been found that glycosyl naringenin exhibits various beneficial physiological functions, such as antioxidant activity, capillary-strengthening effects, bleeding-prevention effects, blood pressure-regulating effects, cholesterol-lowering effects, and TNF inducing activity, which contributes to the maintenance of homeostasis in the body.

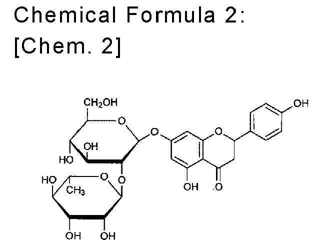

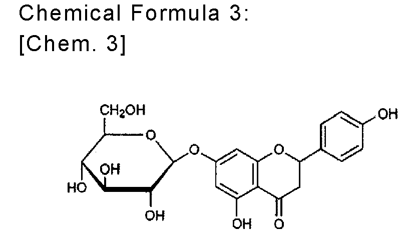

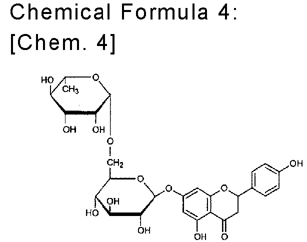

As a representative compound encompassed by "glycosyl naringenin" as referred to in the present description, "glycosyl naringin", a glycoside of naringin, is included. "Glycosyl naringin" includes "glucosyl naringin," in which glucose is bound to naringin. Examples of glucosyl naringin include "3"-α-monoglucosyl naringin"(Chemical Formula 5), which has a structure where a glucose residue is bound via an α-glycosidic linkage to the C(3) hydroxyl group of the glucose residue of neohesperidose of naringin (the C(3") hydroxyl group of the naringin); "4'-α-monoglucosyl naringin"(Chemical Formula 6), which has a structure where a glucose residue is bound via an α-glycosidic linkage to the C(4') hydroxyl group of naringin; and "3",4'-α-diglucosyl naringin"(Chemical Formula 7), which has a structure where two glucose residues are bound to naringin, one being bound via an α-glycosidic linkage to the C(3") hydroxyl group, and another being bound via an α-glycosidic linkage to the C(4') hydroxyl group of naringin.

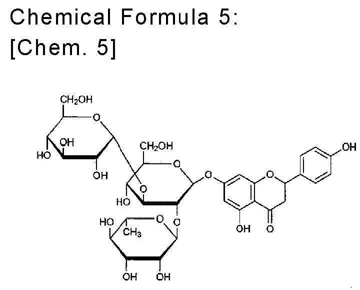

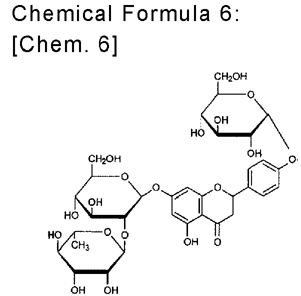

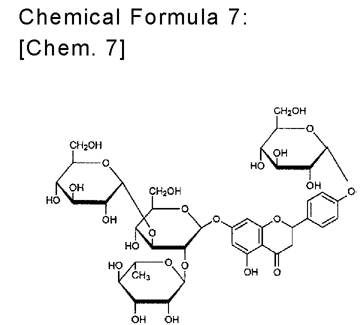

"Glycosyl naringenin" as referred to in the present description include above described naringin, prunin, narirutin, 3"-α-monoglucosyl naringin, 4'-α-monoglucosyl naringin, 3"-α-,4'-α-diglucosyl naringin, and glycosylated compounds of these compounds. Examples of such glycosylated compounds include, but are not limited to, glycosides of naringin, such as α-maltosyl naringin, α-maltotriosyl naringin, α-maltotetraosyl naringin, α-maltopentaosyl naringin; glycosides of prunin, such as α-glucosyl prunin, α-maltosylprunin, α-maltotriosyl prunin, α-maltotetraosyl prunin, α-maltopentaosylprunin; and glycosides of narirutin, such as α-glucosyl narirutin, α-maltosylnarirutin, α-maltotriosyl narirutin, α-maltotetraosyl narirutin, and α-maltopentaosylnarirutin.

The method for producing glycosyl naringenin is not particularly limited. Glycosyl naringenin may be produced using enzymes or by chemical synthesis. If necessary, it may also be produced by a fermentation method or a method combining enzymatic and chemical synthesis methods. Examples of an enzymatic method using a glycosyltransferase include methods in which a glycosyltransferase, such as α-glucosidase, cyclomaltodextrin glucanotransferase, and α-amylase, is allowed to act on naringin in the presence of an α-glucosyl saccharide compound, such as partial starch hydrolyzates or maltooligosaccharides, as disclosed in, for example, Japanese Patent Application Publication Nos. H4-13691 and 2007-284393. In accordance with this method, a series of 3"-α-glycosyl naringins having a glycosyl group with a glucose polymerization degree of 1 to 5 can usually be obtained as a glycosyl naringenin. Furthermore, 3"-α-monoglucosyl naringin may also be prepared by allowing a glucoamylase to act on the series of 3"-α-glycosyl naringins.

If glycosyl naringenin contains a glycosyl group comprising D-glucoses as constituent sugars, for example, in the transglycosylated region, the degree of glucose polymerization in the glycosyl group may be appropriately reduced by treating glycosyl naringenin with glucoamylase. On the other hand, the degree of glucose polymerization in the transglycosylated region of glycosyl naringenin may be advantageously increased. The method for increasing the degree of glucose polymerization is not particularly limited, but, for example, a glycosyltransferase, such as cyclomaltodextrin glucanotransferase, may be allowed to act on glycosyl naringenin in the presence of a glycosyl donor, such as partial starch hydrolyzates. If necessary, a monosaccharide other than D-glucose, a disaccharide, an oligosaccharide, or a polysaccharide may be transferred to glycosyl naringenin by transglycosylation.

Prunin, represented by Chemical Formula 3, may be prepared by removing a rhamnose residue from naringin by allowing a rhamnosidase to act on naringin, as disclosed, for example, in Japanese Patent Application Publication No. 2007-284393. On the other hand, narirutin, represented by Chemical Formula 4, may be prepared, for example, by α-1,6 transglycosylation reaction in which rhamnose is transferred to prunin.

The typical production methods of glycosyl naringenin are as described above. However, the methods for producing glycosyl naringenin are not limited to the above-described examples. Those ordinarily skilled in the art can prepare glycosyl naringenin by any appropriate methods. In the present invention, glycosyl naringenin may be used regardless of its origin or production method.

Any compound that falls within the scope of the above-described glycosyl naringenin may be used in the present invention, and the type of glycosyl naringenin is not particularly limited. However, from the viewpoint of water solubility and enhancement of the sensory attributes of culinary botanicals, it may be preferable that the glycosyl naringenin comprises a glycosyl naringin, and more preferably comprises a glucosyl naringin. Further preferably, the glucosyl naringin may comprise one or more selected from 3"-α-monoglucosyl naringin (Chemical Formula 5), 4'-α-monoglucosyl naringin (Chemical Formula 6), and 3",4'-α-diglucosyl naringin (Chemical Formula 7).

When the glycosyl naringenin that may be used in the present invention comprises a glycosyl naringin, the glycosyl naringin content of the glycosyl naringenin is not particularly limited. However, its upper limit is typically 99% by mass or less based on the dry solid content of glycosyl naringenin, as glycosyl naringenin with such a naringin content can be produced on an industrial scale in relatively large quantities, at low cost, and easily. From the viewpoint of further reducing cost, the glycosyl naringin content of the glycosyl naringenin may be 90% by mass or less, preferably 80% by mass or less, more preferably 70% by mass or less, or even as low as 60% by mass or less. However, when the glycosyl naringin content of the glycosyl naringenin based on the dry solid content is low, it becomes necessary to use a larger amount of glycosyl naringenin, which may result in poor handling. Therefore, the lower limit of the glycosyl naringin content of the glycosyl naringenin is typically 10% by mass or more, preferably 20% by mass or more, more preferably 30% by mass or more, further preferably 40% by mass or more, and further more preferably 50% by mass or more, based on the dry solid content of the glycosyl naringenin. The same applies to the upper and lower limits of the glucosyl naringin content of the glycosyl naringenin, when the glycosyl naringenin comprises a glucosyl naringin.

The glycosyl naringenin that may be used in the present invention may be a mixture of two or more compounds that fall within the scope of the glycosyl naringenin as described above. Although any combination of two or more compounds that fall within the scope of the glycosyl naringenin may be used, as shown in the later-described experimental examples, a particularly superior effect in enhancing sensory attributes of culinary botanicals can be obtained by the combination of glucosyl naringin and naringin. That is, in one preferred embodiment, the agent for enhancing a sensory attribute of a culinary botanical according to one aspect of the present invention may be an agent for enhancing a sensory attribute of a culinary botanical, comprising glucosyl naringin and naringin as glycosyl naringenin. Herein, it goes without saying that the agent for enhancing a sensory attribute of a culinary botanical according to one aspect of the present invention may additionally comprise a glycosyl naringenin other than glucosyl naringin and naringin.

When the agent for enhancing a sensory attribute of a culinary botanical according to one aspect of the present invention comprises glucosyl naringin and naringin, glucosyl naringin and naringin may be comprised at any ratio. However, the mass ratio (A:B) of glucosyl naringin (A) and naringin (B) may be, for example, in the range of 99:1 to 1:99. From the viewpoint of further enhancing sensory attributes of culinary botanicals, the mass ratio may be preferably in the range of 95:5 to 40:60, more preferably in the range of 90:10 to 50:50, further preferably in the range of 85:15 to 55:45, further more preferably in the range of 80:20 to 60:40, and particularly preferably in the range of 75:25 to 65:35. In the present description, a numerical range expressed using "to" means a numerical range including both the upper and lower limits, unless otherwise specified.

The glycosyl naringenin that may be used in the present invention may be in the form of a mixture, which comprises other components to the extent that the desired effect of the present invention can be achieved. The other components that may be comprised in the mixture may include concomitants derived from the production process. Examples of such concomitants include, but are not limited to, flavonoids, such as diosmin and neoponcirin, trace components, such as salts, and naringenin, which is an aglycone. The glycosyl naringenin that may be used in the present invention does not necessarily need to be highly purified. In other words, glycosyl naringenin in partially purified or even unpurified form may be used in the present invention. For example, when the glycosyl naringenin is prepared by an enzymatic method, the enzyme reaction solution containing glycosyl naringenin may be used directly.

### <Culinary Botanicals>

In the present description, the term "culinary botanicals" means a part of plants that is used in order to impart distinctive pungency, spiciness, aroma, flavor, and/or color to foods, beverages or seasonings.

Examples of plants used as a raw material of culinary botanicals include, but are not limited to ajwain, angelica, anise, allspice, oregano, mustard green, garlic, cardamom, curry leaf, caraway, cumin, clove, caper, pepper (green pepper, black pepper, white pepper, red pepper), coriander, saffron, Japanese pepper *(sansho), shiso* (Perilla frutescens var. crispa), cinnamon, ginger, horseradish, sage, sesame, celery, white mustard, thyme, tarragon, turmeric, chervil, chive, chili pepper, dried citrus peel (*chenpi*), red pepper, nutmeg, cilantro, star anise, basil, parsley, paprika, Sichuan pepper (*huajiao*), fennel, peppermint, marjoram, lemongrass, lemon balm, rosemary, bay leaf, and *wasabi* (Japanese horseradish). As culinary botanicals, flowers, leaves, stems, roots, branches, bark, fruits, buds, or seeds of these plants are used either in their natural form or after processing, such as drying, grinding, pulverizing, or grating, if necessary. Culinary botanicals are categorized into herbs and spices, depending on the part of the plant used as a raw material. Herbs refer to culinary botanicals that utilize the flowers, leaves, or stems of the plant, while spices refer to culinary botanicals other than herbs, typically those that utilize the roots, branches, bark, fruits, buds or seeds of the plants. The term "culinary botanicals" as used in the present description includes both herbs and spices, unless otherwise specified.

In the present description, the term "sensory attributes of culinary botanicals" refers to distinctive pungency, spiciness, aroma and/or flavor imparted by culinary botanicals. Unless otherwise specified, in the present description, "enhancement of sensory attributes of culinary botanicals" means increase and/or improvement of distinctive pungency, spiciness, aroma and/or flavor imparted by them, compared to when the agent for enhancing a sensory attribute of culinary botanicals is not used. It should be noted that the enhancement of the distinctive pungency, spiciness, aroma, and/or flavor includes both an increase in their intensity and an improvement in their persistence.

According to the findings of the present inventors, the agent for enhancing a sensory attribute of a culinary botanical in accordance with one aspect of the present invention can exhibit particularly excellent effects in enhancing sensory attributes of culinary botanicals perceived in the oral cavity. In other words, in one preferred embodiment, a sensory attribute of a culinary botanical that is enhanced by the agent for enhancing a sensory attribute of a culinary botanical in accordance with one aspect of the present invention may be a sensory attribute of culinary botanicals perceived in the oral cavity. The sensory attribute of culinary botanicals perceived in the oral cavity refers, for example, to the pungency, spiciness, and/or flavor imparted by culinary botanicals and sensed in the oral cavity. More preferably, it may refer to the pungency and/or spiciness imparted by culinary botanicals and sensed in the oral cavity. From another perspective, the agent for enhancing a sensory attribute of a culinary botanical in accordance with one aspect of the present invention may be particularly suitable for use with culinary botanicals that are used for imparting pungency and/or spiciness to foods and beverages. The culinary botanicals used for imparting pungency and/or spiciness to foods and beverages are primarily those categorized as spices. More specifically, such spices include, but are not limited to, allspice, cumin, clove, pepper, Japanese pepper (*sansho*), cinnamon, ginger, horseradish, red pepper, Sichuan pepper (*huajiao*), mustard, *wasabi* (Japanese horseradish), and blended spices containing any of these, such as Chinese five spice powder (*wuxiangfen*), garam masala, curry powder, Cajun spice, *shichimi togarashi* (Japanese seven-flavor chili pepper), and chili powder. These culinary botanicals, which elicit a sensation of pungency in the oral cavity, are known to activate TRPV1 (Transient Receptor Potential Vanilloid 1) expressed in sensory neurons of the oral cavity. It is considered that activation of TRPV1 is involved in the perception of the pungency provided by these culinary botanicals.

The enhancement of a sensory attribute of a culinary botanical may be evaluated, for example, by sensory evaluation methods. The sensory evaluation may be carried out by trained panelists. For example, a sensory attribute of a culinary botanical of a sample with the agent for enhancing a sensory attribute of a culinary botanical in accordance with one aspect of the present invention may be evaluated, against a control sample not containing the agent. There is no particular limitation on the type of samples to be evaluated. For example, food or beverage products containing culinary botanicals, seasonings containing culinary botanicals, culinary botanicals themselves, and extracts of culinary botanicals may be used as samples.

The agent for enhancing a sensory attribute of a culinary botanical in accordance with one aspect of the present invention may advantageously be used for enhancing the sensory attributes of culinary botanicals in culinary botanicals themselves, or various products containing culinary botanical ingredients, such as processed culinary botanicals, food or beverage products, and seasonings. For example, culinary botanicals or processed culinary botanicals with enhanced sensory attributes imparted by culinary botanicals may be obtained by bringing the agent for enhancing a sensory attribute of a culinary botanical in accordance with one aspect of the present invention into coexistence with culinary botanical themselves or with processed culinary botanicals, such as culinary botanical extract formulations containing a culinary botanical ingredient. There is no particular limitation on the form of processed culinary botanicals with which the agent may be used. For example, they can be in the form of powders, liquids, emulsions, and the like.

The agent for enhancing a sensory attribute of a culinary botanical of the present invention may also be used in combination with seasonings or food or beverage products containing a culinary botanical ingredient. For example, food or beverage products and/or seasonings with enhanced sensory attributes of culinary botanicals may be obtained by bringing the agent for enhancing a sensory attribute of a culinary botanical in accordance with one aspect of the present invention into coexistence with food or beverage products and/or seasonings containing a culinary botanical ingredient. In another aspect, the present invention also provides a method for enhancing a sensory attribute of culinary botanicals in a food or beverage product and/or seasoning, comprising a step of bringing an agent for enhancing a sensory attribute of culinary botanicals comprising a glycosyl naringenin into coexistence with the food or beverage product and/or seasoning comprising a culinary botanical ingredient.

The effect of enhancing sensory attributes of culinary botanicals exhibited by the agent for enhancing a sensory attribute of a culinary botanical in accordance with one aspect of the present invention is achieved by coexistence of a glycosyl naringenin and a culinary botanical ingredient. There is no particular limitation on the timing at which the agent for enhancing a sensory attribute of a culinary botanical in accordance with one aspect of the present invention is brought into coexistence with a food or beverage product, or seasoning comprising a culinary botanical ingredient, as long as they coexist at the time of consumption. For example, they may be brought into coexistence during the preparation or production of the food or beverage products or seasonings, or just before or during consumption.

There is no particular limitation on the amount of the agent for enhancing a sensory attribute of a culinary botanical in accordance with one aspect of the present invention to be used. However, when the concentration of glycosyl naringenin at the time of consumption is high, bitterness derived from glycosyl naringenin may be perceived in the oral cavity. Therefore, although it depends on the type of products to which the agent for enhancing a sensory attribute of a culinary botanical in accordance with one aspect of the present invention is applied, when it is desired to avoid the perception of such bitterness derived from glycosyl naringenin, the agent may be preferably used such that the concentration of glycosyl naringenin at the time of consumption is less than 100ppm, more preferably 75ppm or less, further preferably 50ppm or less, and further more preferably 20ppm or less. In some cases, the concentration of glycosyl naringenin at the time of consumption may be reduced to 10ppm or less, 5ppm or less, or even as low as 3ppm or less. On the other hand, there is no particular limitation on the lower limit of the amount of glycosyl naringenin to be used. For example, the agent may be used such that the concentration of glycosyl naringenin at the time of consumption is 0.01ppm or more, preferably 0.1ppm or more, more preferably 0.5ppm or more, and further preferably 1ppm or more. In cases where the products to which the agent for enhancing a sensory attribute of a culinary botanical according to one aspect of the present invention is applied are seasonings, or food or beverage products that are consumed directly, the amount of the agent to be used may be appropriately adjusted such that the content of glycosyl naringenin in the products falls within the range described above. On the other hand, in cases where the products to which the agent for enhancing a sensory attribute of a culinary botanical according to one aspect of the present invention is applied are consumed after being diluted with a certain amount of hot water, water, or the like, the amount of the agent to be used may be appropriately adjusted according to the dilution ratio.

### <Processed Culinary Botanical>

In accordance with one aspect of the present invention, a processed culinary botanical comprising a culinary botanical ingredient and a glycosyl naringenin is provided. The processed culinary botanical in accordance with one aspect of the present invention may be advantageously used for production of food or beverage products, and seasonings, as a processed culinary botanical with an enhanced sensory attribute of a culinary botanical imparted by the culinary botanical ingredient.

The term "processed culinary botanical" as used herein refers to a food ingredient that contains a culinary botanical as its main raw material and is used for the purpose of imparting sensory attributes of the culinary botanical to food or beverage products, and/or seasonings. Such processed culinary botanicals are obtained by processing the above-described culinary botanicals through pulverization, powdering, grating, extraction, heating, mixing, and the like. Examples of processed culinary botanicals as used in the present description include grated ginger or grated *wasabi,* which is obtained by grating culinary botanicals as well as mixed culinary botanicals (mixed spices) obtained by blending two or more culinary botanicals, such as Chinese five spice powder (*wuxiangfen*), garam masala, curry powder, quatre epices (quatre épice), cajun spice, *shichimi togarashi* (Japanese seven-flavor chili pepper), and chili powder. The processed culinary botanical in accordance with one aspect of the present invention may be referred to as a processed culinary botanical, since it is produced by a method comprising at least a step of bringing a culinary botanical ingredient into coexistence with a glycosyl naringenin.

The "culinary botanical ingredient" contained in the processed culinary botanical in accordance with one aspect of the present invention may be any ingredient, as long as it is primarily derived from a culinary botanical as its main raw material and possesses the sensory attributes of culinary botanicals. The culinary botanical ingredient may be in any form. For example, it may be the culinary botanical itself, or a part thereof, such as a pulverized or powdered product of culinary botanicals. It may also be an extract of a culinary botanical, or a mixture of any of the above. A processed culinary botanical containing an extract of a culinary botanical may be called a culinary botanical extract preparation, which may be suitably used, for example, for preparation of snacks, instant noodles, seasonings, processed meat products, and the like.

An extract of a culinary botanical can be obtained, for example, by extracting the culinary botanical with an appropriate solvent such as water, oil, alcohol, organic solvent, or mixed solvent thereof. Although the culinary botanical extract may be extracted by any extraction method, suitable extraction methods include room temperature extraction, heat-assisted extraction, pressurized extraction, agitation extraction, ultrasonication extraction, steam distillation, supercritical fluid extraction, and the like. The obtained culinary botanical extract may be used directly, or further purified or concentrated before use. For example, an essential oil obtained by steam distillation may be used directly, or an essence prepared by diluting the essential oil with aqueous ethanol or the like may be used. An oleoresin obtained by removing the solvent under atmospheric or reduced pressure from a culinary botanical extract obtained by an appropriate extraction method may also be used. If necessary, these culinary botanical extracts may be formulated into various preparations. For example, powders prepared using additives such as excipients, and solutions prepared by dissolving culinary botanical extracts in appropriate solvents, such as vegetable oil, alcohol, water, or water-alcohol mixtures may be used. Emulsions prepared by emulsifying culinary botanical extracts using additives such as emulsifiers may also be used.

As described above, according to the findings of the present inventors, glycosyl naringenin can exhibit particularly excellent effects in enhancing the pungency and/or spiciness of culinary botanicals. Accordingly, in one preferred embodiment, the culinary botanical ingredient contained in the processed culinary botanical in accordance with one aspect of the present invention may be a culinary botanical ingredient used for imparting pungency and/or spiciness. Such a culinary botanical ingredient may be an ingredient derived from a culinary botanical used for imparting pungency and/or spiciness. More specifically, it may be a culinary botanical itself used for imparting pungency and/or spiciness, or a pulverized product, powder, and/or extract thereof. Examples of culinary botanicals that may be used for imparting pungency and/or spiciness are as above described. Examples of ingredients contained in extracts of such culinary botanicals include capsaicin contained in red pepper extract; gingerol, shogaol, zingerone contained in ginger extract; piperine contained in black pepper extract; eugenol contained in clove extract; sanshool contained in Sichuan pepper or Japanese pepper extract; allyl isothiocyanate contained in *wasabi* extract. These ingredients are known to activate TRPV1 (Transient Receptor Potential Vanilloid 1), expressed in sensory neurons in the oral cavity. As discussed above, activation of TRPV1 is considered to be involved in the perception of the pungent sensation imparted by culinary botanicals. In a preferred embodiment, the culinary botanical ingredient contained in the processed culinary botanical in accordance with one aspect of the present invention may include one or more of these ingredients.

The processed culinary botanical in accordance with one aspect of the present invention may further contain other components commonly used in processed culinary botanical products, in addition to the culinary botanical ingredient and glycosyl naringenin. Examples of such components include, but are not limited to, solvents such as water, alcohol, vegetable oils, and water-alcohol mixed solvents; excipients such as starch and dextrin; emulsifiers such as glycerin fatty acid esters, sorbitan fatty acid esters, polyglycerin fatty acid esters, polyoxyethylene sorbitan fatty acid esters, and lecithin; and antioxidants such as ascorbic acid, ascorbic acid derivatives, and vitamin E.

The processed culinary botanical in accordance with one aspect of the present invention is not particularly limited in form and may be provided in any suitable form. For example, it may be in the form of a powder, granule, paste, gel, block, liquid, and the like.

The processed culinary botanical in accordance with one aspect of the present invention may be packaged in a container. Examples of containers include, but are not limited to, bottles, cans, jars, tubes, pouches, bags, and the like.

The processed culinary botanical in accordance with one aspect of the present invention may be added or incorporated into seasonings, food or beverage products, and the like, and used to impart excellent sensory attributes of culinary botanicals to these products. There is no particular limitation on the timing at which the processed culinary botanical in accordance with one aspect of the present invention is added or incorporated into food or beverage products, or seasonings, and it may be added or incorporated at any appropriate time at user's discretion. For example, it may be added just before or during the consumption of food and beverage products, or seasonings. Or, it may be added or incorporated during the manufacturing or cooking process of food or beverage products, or seasonings. In this way, the processed culinary botanical of the present invention can be used in the same manner as general culinary botanicals, in food or beverage products, or seasonings.

There is no particular limitation on the amount of the processed culinary botanical in accordance with one aspect of the present invention to be used. However, when the concentration of glycosyl naringenin at the time of consumption is high, bitterness derived from glycosyl naringenin may be perceived in the oral cavity. Therefore, although it depends on the type of products to which the processed culinary botanical in accordance with one aspect of the present invention is applied, when it is desired to avoid the perception of such bitterness derived from glycosyl naringenin, the agent may be preferably used such that the concentration of glycosyl naringenin at the time of consumption is less than 100ppm, more preferably 75ppm or less, further preferably 50ppm or less, and further more preferably 20ppm or less. In some cases, the concentration of glycosyl naringenin at the time of consumption may be reduced to 10 ppm or less, 5 ppm or less, or even as low as 3 ppm or less. On the other hand, there is no particular limitation on the lower limit of the amount of glycosyl naringenin to be used. For example, the agent may be used such that the concentration of glycosyl naringenin at the time of consumption is 0.01ppm or more, preferably 0.1ppm or more, more preferably 0.5ppm or more, and further preferably 1ppm or more. In cases where the products to which the processed culinary botanical in accordance with one aspect of the present invention is applied are seasonings, or food or beverage products that are consumed directly, the amount of the processed culinary botanical to be used may be appropriately adjusted such that the content of glycosyl naringenin in the products falls within the range described above. On the other hand, in cases where the products to which the processed culinary botanical in accordance with one aspect of the present invention is applied are consumed after being diluted with a certain amount of hot water, water, or the like, the amount of the processed culinary botanical to be used may be appropriately adjusted according to the dilution ratio.

The content of glycosyl naringenin in the processed culinary botanical according to one aspect of the present invention is not particularly limited. The glycosyl naringenin may be comprised at any appropriate amount, depending on the type of culinary botanical ingredients contained in the processed culinary botanical and the intended use thereof. By way of example, the content of glycosyl naringenin in the processed culinary botanical in accordance with one aspect of the present invention may be from 0.001% to 10% by mass, preferably from 0.01% to 5% by mass, more preferably from 0.05% to 2% by mass, and further preferably from 0.1% to 1% by mass. The processed culinary botanical comprising a glycosyl naringenin within such a concentration range is extremely useful, since it can allow the concentration of glycosyl naringenin in food or beverage products to fall within the above-described range by adding a relatively small amount of the processed culinary botanical.

### <Seasoning>

In accordance with one aspect of the present invention, a seasoning comprising a culinary botanical ingredient and a glycosyl naringenin is provided. The seasoning in accordance with one aspect of the present invention may be advantageously used as a seasoning with enhanced sensory attributes imparted by the culinary botanical ingredient. In addition to the culinary botanical ingredient and glycosyl naringenin, the above-described seasoning comprises salt, sweeteners, acidulants, bittering agents, *umami* seasonings, and/or the like. By including these ingredients, the seasoning can not only impart enhanced sensory attributes of culinary botanicals to food or beverage products, but also provide saltiness, sweetness, sourness, bitterness, *umami,* and/or the like, making it highly useful for adjusting the overall taste of food or beverage products.

There is no particular limitation on the type of seasoning in the present invention. Examples of seasonings include, but are not limited to, seasoning spices for barbecue or grilled meat; seasonings for noodles such as liquid or powdered soup bases for ramen, *udon, soba* (buckwheat noodles), and noodle dipping sauces; seasonings for meat dishes such as barbecue sauce, steak sauce, hamburger steak sauce, and *teriyaki* sauce; seasonings for fish dishes such as sauces and *tare* for *saikyo-yaki,* simmered dish, miso-simmered dish, and *teriyaki;* seasonings for salad such as mayonnaise and dressings; seasonings for hot pots such as soup bases for hot pots; seasonings for curry such as curry roux and curry paste; demi-glace sauce; Japanese-style thickened Worcestershire sauce (*chuno* sauce); oyster sauce; ketchup; *yuzu kosho;* chili oil; Japanese mustard; mustard; wasabi paste; seasonings for snack products such as potato chips; seasonings for Chinese dishes such as *mapotofu,* chili shrimp, *huiguorou* (twice-cooked pork), and *chinjaorosu* (stir-fried shredded pork with green pepper); seasonings for Korean dishes such as bibimbap; seasonings for pasta dishes such as tomato sauce, genovese sauce, basil sauce, peperoncino sauce, porcini mushroom sauce, and meat sauce; seasonings for rice dishes such as *takikomi gohan* (rice cooked with seasonings) and *maze gohan* (rice cooked with other ingredients); soy sauce; miso; *douchijiang* (fermented black bean sauce), *doubanjiang* (fermented chili bean sauce); *tianmianjiang* (sweet bean sauce); *zhimajiang* (Chinese sesame sauce); XO sauce; and Korean fermented bean sauces such as ganjang, gochujang, doenjang, ssamjang, and yukgaejang.

The seasoning in accordance with one aspect of the present invention may comprise food ingredients commonly used in seasonings, provided that the effect of enhancing the sensory attributes of culinary botanicals by glycosyl naringenin can be obtained. Examples of such food ingredients include, but are not limited to, inorganic salts, such as salt; flavoring agents, such as soy sauce, fish sauce, *miso, sake,* and *mirin;* sweeteners, such as monosaccharides, disaccharides, oligosaccharides, sugar alcohols, and high-intensity sweeteners; edible fats and oils, such as perilla oil, olive oil, beef tallow, fish oil, sesame oil, rice bran oil, corn oil, safflower oil, *shiso* oil, soybean oil, rapeseed oil, milk fat, palm oil, sunflower oil, cottonseed oil, coconut oil, peanut oil, and lard; extracts, such as chicken extract, beef extract, pork extract, seafood extract, vegetable extract, and yeast extract; egg yolk; vegetables, such as onion, carrot, *negi* (Japanese onion), and bell pepper; meats, such as beef, chicken, and pork; seafoods, such as squid, shrimp, shellfish, fish, and octopus; *umami* seasonings, including amino acid-based *umami* seasonings such as alanine, glutamic acid, aspartic acid, glycine, and their salts, as well as nucleotide-based *umami* seasonings such as sodium guanylate and sodium inosinate; acidulants, such as citric acid, gluconic acid, succinic acid, acetic acid, tartaric acid, lactic acid, phytic acid, fumaric acid, phosphoric acid, and DL-malic acid; thickeners, such as gum arabic, alginate, modified starch, curdlan, carrageenan, carboxymethyl cellulose, xanthan gum, guar gum, glucomannan, corn starch, gellan gum, gelatin, cellulose, tamarind seed gum, starch, pullulan, pectin, polydextrose, and locust bean gum; excipients, such as dextrin and starch; bittering agents, such as iso-α-bitter acids, olive tea, caffeine, quinine, quassin, *Trametes versicolor* (*kawaratake*) extracts, *Cinchona* extract, *Phellodendron* bark extract, *Gentiana lutea* root extract, *Jamaica quassia* extract, tea extract, theobromine, *Quassia* extract, *Artemisia absinthium* (*nigayomogi*) extract, *Isodon japonicus* extract, *Agaricus blazei* (*himematsutake*) extract, *Tinospora cordifolia* (*boraphet*), methylthioadenosine, *Ganoderma lucidum* (*mannentake*) extract, *Citrus aurantium* (*daidai*) extract, and *Artemisia princeps* (mugwort) extract; flavoring agents; emulsifiers, such as glycerin fatty acid esters, sorbitan fatty acid esters, polyglycerin fatty acid esters, polyoxyethylene sorbitan fatty acid esters, and lecithin; antioxidants, such as ascorbic acid, ascorbic acid derivatives, and vitamin E; chelating agents, such as ethylenediaminetetraacetic acid, citric acid, gluconic acid, succinic acid, lactic acid, fumaric acid, phosphoric acid, and DL-malic acid; pH adjusting agent, such as citric acid, gluconic acid, succinic acid, acetic acid, tartaric acid, vinegar, lactic acid, phytic acid, phosphoric acid, and DL-malic acid.

The seasoning in accordance with one aspect of the present invention may be provided in any form without particular limitation. For example, it may be provided in the form of powder, granule, paste, gel, block, liquid, or the like. On the other hand, the seasoning in accordance with one aspect of the present invention may be packaged in a container. Examples of containers include, but are not limited to, bottles, cans, jars, tubes, pouches, and bags.

There is no particular limitation on the glycosyl naringenin content in the seasoning in accordance with one aspect of the present invention. However, when the glycosyl naringenin content in the seasoning is high, bitterness derived from glycosyl naringenin may be perceived. Therefore, although it depends on the type of seasonings, when it is desired to avoid the perception of such bitterness derived from glycosyl naringenin, the glycosyl naringenin content in the seasoning in accordance with the present invention may be preferably less than 100ppm, more preferably 75ppm or less, further preferably 50ppm or less, and further more preferably 20ppm or less. In some cases, the glycosyl naringenin content in the seasoning may be reduced to 10ppm or less, 5ppm or less, or even as low as 3ppm or less. On the other hand, there is no particular limitation on the lower limit of the glycosyl naringenin content in the seasoning. For example, it may be 0.01ppm or more, preferably 0.1ppm or more, more preferably 0.5ppm or more, and further preferably 1ppm or more. It goes without saying that when the seasoning according to one aspect of the present invention is a seasoning that is used in a diluted form, such as concentrated soup base, curry roux, or powdered soup, the glycosyl naringenin content in the seasoning may be appropriately adjusted according to the dilution ratio.

### <Food or Beverage Product>

In accordance with one aspect of the present invention, a food or beverage product comprising a culinary botanical ingredient and a glycosyl naringenin is provided. The food or beverage product in accordance with one aspect of the present invention is a food or beverage product with excellent sensory attributes of culinary botanicals, in which sensory attributes of the culinary botanical ingredient are enhanced by the glycosyl naringenin.

There is no particular limitation on the types of food or beverage products in the present invention. Examples include, but are not limited to, noodles, such as *udon* (thick wheat noodle), *somen* (thin wheat noodle), soba (buckwheat noodle), *nyumen* (hot *somen*), pasta, rice noodles, *yakisoba* (fried noodles), laksa, and ramen; meat dishes, such as Japanese fried chicken (karaage), kebabs, churrasco, steak, grilled meat, hamburger steak, and fried chicken; fish dishes, such as fried fish, simmered fish, and grilled fish; processed meat products, such as steamed chicken breast, sausages, ham, bacon; processed fish products, such as *kamaboko, chikuwa, hanpen,* and fish sausages; snacks, such as crackers and potato chips; western confectionery, such as cookies, muffins, and cakes; Chinese dishes, such as chili shrimp, Chinese dumpling, *suancaiyu* (spicy pickled fish soup), *shumai* (steamed meat dumpling), *xiaolongbao* (soup dumplings), *shuizhuniurou* (Sichuan Boiled Beef), sweet and sour pork, Chinese soups, Chinese steamed buns, fried rice, *chinjaorosu* (stir-fried shredded pork with green pepper), stir-fried green peppers and meat, *mapotofu, mapo* eggplant, hot pot, and ramen; Korean dishes, such as *kimchi, sundubu jjigae* (spicy tofu stew), *buchimgae* (Korean pancake), jjigae (Korean stew), *bibimbap,* and *yukhoe* (Korean raw beef); Indian dishes, such as achar, spiced curry, and raita; soups, such as tom-yum-goong, potage (thick soup), and minestrone; fast foods, such as pizza, hamburgers, French fries, and fried chicken; beverages, such as cola, chai, and flavored teas. Other examples include *oyakodon* (chicken and egg bowl), *katsudon* (pork cutlet bowl), curry rice, *gyudon* (beef bowl), gratin, salad, sandwiches, stew, prepared bread, *hayashi rice* (Japanese hashed beef rice), *harusame* (vermicelli), pilaf, *butadon* (pork bowl), marinated dishes, and risotto. The above-mentioned food or beverage products may be in the form of processed foods. Examples of such processed foods include, but are not limited to, instant cup noodles such as cup ramen, cup *yakisoba,* cup *udon,* and cup pasta; instant bagged noodles such as bagged ramen and bagged *nyumen;* instant soups such as cup soups and instant miso soup; roux products such as curry roux and stew roux; frozen foods; retort foods (boil-in-bag foods), such as retort curry, retort *hayashi rice,* retort *gyudon* (beef bowl), retort Chinese rice bowls, retort *oyakodon* (chicken and egg bowl), retort sweet and sour pork, and retort stew; and canned foods.

The food or beverage product in accordance with one aspect of the present invention may include food ingredients commonly used in food and beverage products, provided that the effect of enhancing the sensory attributes of culinary botanicals by glycosyl naringenin can be obtained. Examples of such food ingredients include, but are not limited to, meats such as beef, chicken, and pork; seafood such as squid, shrimp, shellfish, octopus, and fish; vegetables such as onion, carrot, *negi* (Japanese onion), and bell pepper; mushrooms such as *shiitake* (*Lentinula edodes*), *maitake* (*Grifola frondosa*), *enoki* (*Flammulina velutipes*), and eringi mushroom (*Pleurotus eryngii*); grains such as barley, wheat, rice, corn, and glutinous barley; sweeteners such as monosaccharides, disaccharides, oligosaccharides, sugar alcohols, and high-intensity sweeteners; acidulants such as citric acid, gluconic acid, succinic acid, acetic acid, tartaric acid, lactic acid, phytic acid, fumaric acid, phosphoric acid, and DL-malic acid; edible fats and oils, such as perilla oil, olive oil, beef tallow, fish oil, sesame oil, rice bran oil, corn oil, safflower oil, *shiso* oil, soybean oil, rapeseed oil, milk fat, palm oil, sunflower oil, cottonseed oil, coconut oil, peanut oil, and lard; seasonings, including amino acid-based seasonings such as alanine, glutamic acid, aspartic acid, and glycine, as well as nucleotide-based seasonings such as sodium guanylate and sodium inosinate; thickeners, such as gum arabic, alginate, modified starch, curdlan, carrageenan, carboxymethyl cellulose, xanthan gum, guar gum, glucomannan, corn starch, gellan gum, gelatin, cellulose, tamarind seed gum, starch, pullulan, pectin, polydextrose, and locust bean gum; flavoring agents; emulsifiers, such as glycerin fatty acid esters, sorbitan fatty acid esters, polyglycerin fatty acid esters, polyoxyethylene sorbitan fatty acid esters, and lecithin; antioxidants, such as ascorbic acid, ascorbic acid derivatives, sodium bisulfite, sodium sulfite, sodium thiosulfate, and vitamin E; chelating agents, such as ethylenediaminetetraacetic acid, citric acid, gluconic acid, succinic acid, lactic acid, fumaric acid, phosphoric acid, and DL-malic acid; pH adjusting agents, such as hydrochloric acid, citric acid, gluconic acid, succinic acid, acetic acid, tartaric acid, triethanolamine, lactic acid, phytic acid, monoethanolamine, phosphoric acid, and DL-malic acid; isotonic agents, such as sodium bisulfite, sodium sulfite, potassium chloride, calcium chloride, sodium chloride, glycerin, potassium acetate, sodium acetate, sodium bicarbonate, sodium carbonate, sodium thiosulfate, propylene glycol, magnesium sulfate, monosodium phosphate, and disodium phosphate; stabilizing agents, such as tocopherol, tromethamol (tris(hydroxymethyl)aminomethane), sodium metabisulfite, monoethanolamine, sodium monostearate, and glyceryl monostearate; coloring agents, such as natural colorants including caramel color, carotene, gardenia pigment, paprika pigment, flavonoid pigments, *matcha* pigment, and the like; and synthetic colorants including Red No. 2, Red No. 3, Red No. 104, Red No. 105, Red No. 106, Yellow No. 4, Yellow No. 5, Blue No. 1, titanium dioxide, and the like. For example, the food or beverage product may also include bittering agents, culinary botanicals, preservatives, bactericidal agents, or antimicrobial agents.

There is no particular limitation on the glycosyl naringenin content in the food or beverage product in accordance with one aspect of the present invention. However, when the glycosyl naringenin content in the food or beverage product is high, bitterness derived from glycosyl naringenin may be perceived, depending on the type of food and beverage product. Therefore, although it depends on the type of food or beverage product, when it is desired to avoid the perception of such bitterness derived from glycosyl naringenin, the glycosyl naringenin content in the food or beverage product in accordance with the present invention may be preferably less than 100ppm, more preferably 75ppm or less, further preferably 50ppm or less, and further more preferably 20ppm or less. In some cases, the glycosyl naringenin content in the food or beverage product may be reduced to 10ppm or less, 5ppm or less, or even as low as 3ppm or less. On the other hand, there is no particular limitation of the lower limit on the glycosyl naringenin content in the food or beverage product. For example, it may be 0.01ppm or more, preferably 0.1ppm or more, more preferably 0.5ppm or more, and further preferably 1ppm or more. It goes without saying that when the food or beverage product according to one aspect of the present invention is a food or beverage product that is consumed after being diluted with a certain amount of hot water or the like, the glycosyl naringenin content in the food or beverage product may be appropriately adjusted according to the dilution ratio.

The present invention is described in further detail below, with reference to experimental examples. However, the scope of the present invention is not limited by these examples.

### Experiment 1: Effect of Glycosyl Naringenin on Sensory Attribute of Black Pepper

### <Preparation of Samples>

One part by mass of black pepper was ground using a commercially-available mill. The ground black pepper was immersed in 99 parts by mass of water at room temperature, immediately placed in a freezer at -18°C, and left overnight in the freezer. The sample was thawed under running water at room temperature for 2 hours. The ground black pepper was removed by centrifugation to obtain a 1% black pepper aqueous solution. The obtained 1% black pepper aqueous solution was diluted fivefold with water to prepare a 0.2% black pepper aqueous solution. To the obtained 0.2% black pepper aqueous solution, a glycosyl naringenin mixture (product name: NARINVID^{™}, manufactured by Hayashibara Co., Ltd.) containing 3"-α-monoglucosyl naringin and naringin was added such that the final concentration of glycosyl naringenin was 5ppm. Thereby, test sample 1 was obtained. The above-described glycosyl naringenin mixture contains 70% by mass of 3"-α-monoglucosyl naringin and 30% by mass of naringin, which also applies to the following experiments and examples. The 0.2% black pepper aqueous solution prior to the addition of the glycosyl naringenin mixture was used as a control sample.

### <Sensory Evaluation>

Four trained panelists were asked to consume test sample 1 containing the glycosyl naringenin mixture and a control sample without the glycosyl naringenin mixture, and then were allowed to freely comment on the sensations perceived from test sample 1 containing the glycosyl naringenin mixture, using the control sample as a reference. The results obtained are shown in Table 1.

**[Table 1]**

| | Comment |
|---|---|
| Test sample 1 (Black pepper) (Glycosyl naringenin conc. 5ppm) | - The pungent sensation of black pepper lingering on the tongue was perceived more strongly. The pungent sensation was also persistent. |
| | - The sharpness of the pungency of black pepper was enhanced. |

As shown in Table 1, an enhancement in the pungent sensation characteristic of pepper in the oral cavity and the persistence of this pungent sensation were perceived in test sample 1 containing the glycosyl naringenin mixture, compared with the control sample without the glycosyl naringenin mixture. This result indicates that glycosyl naringenin has the effect of enhancing the sensory attributes characteristic of pepper.

### Experiment 2: Investigation into Effect of Glycosyl Naringenin on Enhancing Sensory Attributes of Culinary Botanicals

In Experiment 1, it was demonstrated that glycosyl naringenin exhibits the effect of enhancing sensory attributes of culinary botanicals. In order to further investigate the glycosyl naringenin's effect of enhancing sensory attributes of culinary botanicals, the effects of enhancing sensory attributes of culinary botanicals shown by 3"-α-monoglucosyl naringin, naringin, and a mixture of these (as used in Experiment 1) were compared.

### <Preparation of Samples>

One part by mass of commercially available coarsely ground black pepper (product name: S&B Black Pepper (Coarsely Ground), sold by S&B Foods Inc.) was immersed in 99 parts by mass of water and left to stand at 70°C for 1 hour. After standing, the ground black pepper was removed by centrifugation to obtain a 1% black pepper aqueous solution. The obtained 1% black pepper aqueous solution was diluted with water according to the ratio shown in Table 2 below. Each diluted solution was added with a 1% aqueous solution of either a glycosyl naringenin mixture (product name: NARINVID^{™}, manufactured by Hayashibara Co., Ltd.) containing 3"-α-monoglucosyl naringin and naringin as glycosyl naringenin; a high-purity 3"-α-monoglucosyl naringin (prepared by Hayashibara Co., Ltd., purity: 99.0%), or naringin (manufactured by Sichuan New Hawk Biotechnology Co., Ltd., purity: 98.2%), such that the final concentration of glycosyl naringenin was 5 ppm. Thereby, test samples 2 to 4 were obtained. Meanwhile, as a control sample, 0.1% black pepper aqueous solution without addition of any of the glycosyl naringenin mixture, high-purity 3"-α-monoglucosyl naringin, or naringin was used. In all of the samples used in this experiment, the concentration of glycosyl naringenin was 5 ppm.

**[Table 2]**

| | Control Sample | Test Sample 2 | Test Sample 3 | Test Sample 4 |
|---|---|---|---|---|
| 1% black pepper aqueous solution | 10 | 10 | 10 | 10 |
| Water (mL) | 90 | 89.5 | 89.5 | 89.5 |
| 0.1% aqueous solution of the glycosyl naringenin mixture (mL) | - | 0.5 | - | - |
| 0.1% aqueous solution of the high-purity 3"-α-monoglucosyl naringin (mL) | - | - | 0.5 | - |
| 0.1% aqueous solution of naringin (mL) | - | - | - | 0.5 |

### <Sensory Evaluation>

Six trained panelists were asked to consume test samples 2 to 4 and the control sample, and then were instructed to select the sample in which the greatest enhancement in "pungency of culinary botanical" and "persistence of the pungency of culinary botanical" is perceived, using the control sample as a reference. For each evaluation item, the number of panelists who selected each sample as showing the greatest enhancement was counted. The results are shown in Table 3.

**[Table 3]**

| | Test Sample 2 | Test Sample 3 | Test Sample 4 |
|---|---|---|---|
| Pungency of culinary botanicals | 4 | 1 | 1 |
| Persistence of pungency of culinary botanicals | 4 | 1 | 1 |

As shown in Table 3, for both evaluation items, "pungency of culinary botanical" and "persistence of the pungency of culinary botanical," more than half of the panelists selected test sample 2, which contained the glycosyl naringenin mixture comprising naringin and 3"-α-monoglucosyl naringin, as exhibiting the greatest enhancement. This result indicates that the combination of naringin and 3"-α-monoglucosyl naringin as glycosyl naringenins shows a particularly superior effect in enhancing the sensory attributes of culinary botanicals.

### Experiment 3: Effect of Glycosyl Naringenin on Sensory Attributes of Various Culinary Botanicals

### Experiment 3-1: Effect of Glycosyl Naringenin on Enhancing Sensory Attributes of Various Culinary Botanicals

### <Preparation of Samples>

One part by mass of star anise, turmeric, curry powder, Sichuan pepper, or red pepper was immersed in 49 parts by mass of water and left to stand at 80°C for 2 hours. After standing, the mixture was filtered to remove solids. The resulting filtrate was added with a glycosyl naringenin mixture (product name: NARINVID^{™}, manufactured by Hayashibara Co., Ltd.) containing 3"-α-monoglucosyl naringin and naringin such that the final concentration of glycosyl naringenin was 5ppm. Thereby, test samples 5 to 9 were obtained. As control samples, the filtrates prior to the addition of the glycosyl naringenin mixture were used.

### <Sensory Evaluation>

Four trained panelists were asked to consume test samples 5 to 9 containing the glycosyl naringenin mixture and control samples without the glycosyl naringenin mixture, and then were allowed to freely comment on the sensations perceived from test samples 5 to 9 containing the glycosyl naringenin mixture, using the control samples as references. The results obtained are shown in Table 4.

**[Table 4]**

| | Comment |
|---|---|
| Test Sample 5 (Star anise) (Glycosyl naringenin conc. 5ppm) | - The depth of the star anise flavor was enhanced. |
| | - No change in aroma was perceived. |
| Test Sample 6 (Turmeric) (Glycosyl naringenin conc. 5ppm) | - Got an impression of a more complex flavor with increased depth. |
| | - No impact on aroma was perceived. |
| Test Sample 7 (Curry powder) (Glycosyl naringenin conc. 5ppm) | - The spiciness and pungency were enhanced. |
| | - The pungency lingered in the mouth for a longer period of time. |
| | - There is no impact on aroma. |
| Test Sample 8 (Sichuan pepper) (Glycosyl naringenin conc. 5ppm) | - The tingling stimulation of Sichuan pepper was perceived strongly and persistently. |
| | - The pungency of Sichuan pepper was sharpened. |
| Test Sample 9 (Red pepper) (Glycosyl naringenin conc. 5ppm) | - The spiciness was enhanced. |
| | - The spiciness of red pepper became more persistent. |

As shown in Table 4, an enhancement in the sensory attributes characteristic of each culinary botanical was observed in each of test samples 5 to 9, which were prepared from star anise, turmeric, curry powder, Sichuan pepper, and red pepper, respectively. It was found that the depth of flavor imparted by the culinary botanical was enhanced in test samples 5 and 6, prepared from star anise and turmeric, which are culinary botanicals that impart characteristic flavors to foods and beverages. On the other hand, it was found that the pungency or spiciness imparted by the culinary botanical was enhanced and its persistence was increased in test samples 7 to 9, prepared from curry powder, Sichuan pepper, and red pepper, which are culinary botanicals that impart a distinctive pungency or spiciness to foods and beverages. These results indicate that glycosyl naringenin has the effect of enhancing the sensory attributes of a wide variety of culinary botanicals.

On the other hand, according to the above experiment, no change in the aroma of the culinary botanicals by the addition of glycosyl naringenin was observed in any of the samples. This result suggests that glycosyl naringenin acts in the oral cavity to enhance the sensory attributes of culinary botanicals. Therefore, it is considered to be particularly suitable for enhancing sensory attributes of culinary botanicals in the oral cavity.

### Experiment 3-2: Effect of Glycosyl Naringenin on Enhancing Sensory Attributes of Red Pepper

Based on the results of Experiment 3-1, it was confirmed that the addition of glycosyl naringenin enhances the sensory attributes of various culinary botanicals. In this experiment, the enhancing effect of glycosyl naringenin on sensory attributes of red pepper was examined in more detail.

### <Preparation of Samples>

Red pepper (product name: Smart Spice Chili Pepper, sold by S&B Foods Inc.) in an amount of 0.1 g was immersed in 99 g of water and left to stand at 70°C for 1 hour. After standing, the mixture of red pepper and water was filtered to remove solids to obtain an aqueous extract of red pepper. To 10 g of the thus obtained aqueous extract of red pepper, 0.05 g of a glycosyl naringenin mixture (product name: NARINVID^{™}, manufactured by Hayashibara Co., Ltd.) containing 3"-α-monoglucosyl naringin and naringin, and 89.95 g of water were added to obtain a test sample 10, which contains the glycosyl naringenin mixture at a final concentration of 5ppm. Meanwhile, an aqueous mixture prepared by adding 90 g of water to 10 g of the above-described aqueous extract of red pepper was used as a control sample not containing the glycosyl naringenin mixture.

### <Sensory Evaluation>

Eleven trained panelists were asked to consume test sample 10, which contained the glycosyl naringenin mixture, and the control sample. Using the control sample as a reference, "pungency of red pepper," "persistence of red pepper's pungency," and "bitterness" were evaluated based on the below described criteria. The results are shown in Table 5 and Figure 1. For each evaluation item, a Steel test was conducted, and a p-value of less than 0.05 (p < 0.05) was considered statistically significant.

| | |
|---|---|
| 2: | Stronger than the control sample |
| 1: | Slightly stronger than the control sample |
| 0: | Equivalent to the control sample |
| -1: | Slightly weaker than the control sample |
| -2: | Weaker than the control sample |

**[Table 5]**

| | Panelist | | | | | | | | | | | Ave. |
|---|---|---|---|---|---|---|---|---|---|---|---|---|
| | No.1 | No.2 | No.3 | No.4 | No.5 | No.6 | No.7 | No.8 | No.9 | No.10 | No.11 | |
| Pungency | 1 | -1 | 2 | 1 | 1 | 2 | 1 | 1 | 1 | 1 | -1 | 0.82* |
| Persistence of Pungency | -1 | -1 | 1 | 1 | 1 | 1 | 0 | 1 | 1 | 2 | 0 | 0.55 |
| Bitterness | 0 | 0 | 0 | 0 | 0 | 0 | 1 | 0 | 0 | 0 | 0 | 0.09 |

| | | | | | | | | | | | | |
|---|---|---|---|---|---|---|---|---|---|---|---|---|
| * represents p <0.05 against control sample. | | | | | | | | | | | | |

As shown in Table 5 and Figure 1, both the pungency of red pepper and the persistence of the pungency were enhanced in test sample 10 containing the glycosyl naringenin mixture, compared to the control sample not containing the glycosyl naringenin mixture, and, in particular, the enhancement of pungency was notably pronounced. Based on this result, it is considered that glycosyl naringenin is especially suitable for enhancing the sensory attributes of red pepper, such as pungency and persistence of pungency, and particularly for enhancing its pungency. Meanwhile, no significant effect on bitterness was observed as a result of the addition of glycosyl naringenin. It is considered that glycosyl naringenin, which can enhance the sensory attributes of a culinary botanical without significantly increasing bitterness, is highly useful as an active ingredient of an agent for enhancing sensory attributes of culinary botanicals.

### Experiment 4: Effect of Enhancing Sensory Attributes of Culinary Botanicals in Food and Beverage (Instant Noodle in Cup, Curry Taste)

To examine the effect of enhancing sensory attributes of culinary botanicals in foods and beverages, glycosyl naringenin was added to a commercially available instant cup noodle containing culinary botanicals, and the change in the sensory attributes imparted by culinary botanicals was evaluated.

### <Preparation of Sample>

Boiling water in an amount of 300 g was added to a commercially available instant noodle with curry taste (product name: Cup Noodle Curry^{™}, manufactured by Nissin Foods Company Limited; net weight: 87 g; containing curry powder, curry seasoning, culinary botanical, and culinary botanical extracts as ingredients). Three minutes after the addition of the boiling water, a glycosyl naringenin mixture (product name: NARINVID^{™}; manufactured by Hayashibara Co., Ltd.) containing 3"-α-monoglucosyl naringenin and naringin was added such that the final concentration of glycosyl naringenin was 10ppm or 15ppm, followed by stirring to obtain the instant cup noodle samples (test samples 11 and 12). An instant cup noodle was prepared in the same manner as described above, except that the glycosyl naringenin mixture was not added, to obtain a control sample.

### <Sensory Evaluation>

Four trained panelists were asked to consume test samples 11 and 12 containing the glycosyl naringenin mixture and a control sample without the glycosyl naringenin mixture, and then were allowed to freely comment on the sensations perceived from test samples 11 and 12 containing the glycosyl naringenin mixture, using the control sample as a reference. The results obtained are shown in Table 6.

**[Table 6]**

| | Comment |
|---|---|
| Test Sample 11 (Instant Noodle in Cup, Curry Taste) (Glycosyl naringenin conc. 10ppm) | - The pungency of culinary botanical was more strongly perceived. |
| | - No bitterness was perceived. The depth of flavor was increased. |
| Test Sample 12 (Instant Noodle in Cup, Curry Taste) (Glycosyl naringenin conc. 15ppm) | - The pungent sensation of culinary botanical was felt more intensely. |
| | - Complexity in flavor was noticed at the beginning. |

As shown in Table 6, the panelists commented that the pungency of the culinary botanical perceived in the oral cavity was enhanced and the depth of flavor was increased in test samples 11 and 12, which contained the glycosyl naringenin mixture, compared to the control sample not containing the glycosyl naringenin mixture. This result indicates that the glycosyl naringenin mixture not only enhances the pungency of the culinary botanicals but also improves their flavor, which is consistent with the results of Experiment 3.

Furthermore, instant cup noodles were prepared in the same manner as described above, except that the glycosyl naringenin mixture was added at a final concentration of 3ppm or 5ppm, and the sensory evaluation was carried out using the resulting instant cup noodles. The panelist commented that the pungency of the culinary botanicals was perceived more strongly and the depth of flavor was enhanced, which is consistent with the results obtained for the instant cup noodles containing 10ppm and 15ppm of the glycosyl naringenin mixture. This result indicates that glycosyl naringenin is effective in enhancing the sensory attributes of culinary botanicals even at low concentrations, such as 3ppm or 5ppm.

### Experiment 5: Effect of Enhancing Sensory Attributes of Culinary Botanicals in Food and Beverage (Instant Noodle in Cup)

To examine the effect of enhancing sensory attributes of culinary botanicals in foods and beverages in more detail, glycosyl naringenin was added to a commercially available instant cup noodle containing culinary botanicals, and the change in the sensory attributes imparted by culinary botanicals was evaluated.

### <Preparation of Sample>

Boiling water in an amount of 300 g was added to a commercially available instant noodle (product name: Cup Noodle^{™}, manufactured by Nissin Foods Company Limited; net weight: 87 g; containing culinary botanical, and culinary botanical extracts as ingredients). Three minutes after the addition of the boiling water, a glycosyl naringenin mixture (product name: NARINVID^{™}; manufactured by Hayashibara Co., Ltd.) containing 3"-α-monoglucosyl naringenin and naringin was added such that the final concentration of glycosyl naringenin was 3ppm or 5ppm, followed by stirring to obtain the instant cup noodle samples (test samples 13 and 14). An instant cup noodle was prepared in the same manner as described above, except that the glycosyl naringenin mixture was not added, to obtain a control sample.

### <Sensory Evaluation>

Four trained panelists were asked to consume test samples 13 and 14 containing the glycosyl naringenin mixture and a control sample not containing the glycosyl naringenin mixture, and then were allowed to freely comment on the sensations perceived from test samples 13 and 14 containing the glycosyl naringenin mixture, using the control sample as a reference. The results obtained are shown in Table 7.

**[Table 7]**

| | Comment |
|---|---|
| Test Sample 13 (Instant Noodle in Cup) (Glycosyl naringenin conc. 3ppm) | - The pepper-like pungency was perceived more strongly. |
| | - The pungency of spice was intensified. |
| Test Sample 14 (Instant Noodle in Cup) (Glycosyl naringenin conc. 5ppm) | - The pungent sensation of spice was perceived more immensely. |

As shown in Table 7, the panelists commented also in this experiment that the pungency of the culinary botanicals in the oral cavity was enhanced in test samples 13 and 14 containing the glycosyl naringenin mixture, compared to the control sample not containing the glycosyl naringenin mixture. This result is consistent with those obtained in Experiments 1 to 4, and indicates that glycosyl naringenin has the effect of enhancing various sensory attributes of culinary botanicals.

### Experiment 6: Effect of Enhancing Sensory Attributes of Culinary Botanicals in Food and Beverage (Instant Vermicelli Soup)

To examine the effect of enhancing sensory attributes of culinary botanicals in food and beverage in more detail, glycosyl naringenin was added to a commercially available instant vermicelli soup containing culinary botanicals, and the change in the sensory attributes imparted by culinary botanicals was evaluated.

### <Preparation of Samples>

Boling water in an amount of 160 g was added to the powdered soup of a commercially available instant vermicelli soup (product name: Soup *Harusame* (*Tonkotsu Shoyu* Flavor); manufactured by Daisho Co., Ltd.; net weight: 6.2 g; containing garlic powder, pepper, ginger, and rosemary extract as ingredients). Therein, a glycosyl naringenin mixture (product name: NARINVID^{™}; manufactured by Hayashibara Co., Ltd.) containing 3"-α-monoglucosyl naringin and naringin was added such that the final concentration of glycosyl naringenin was 5ppm, followed by stirring to obtain test sample 15. Meanwhile, an instant vermicelli soup was cooked in the same manner as described above, except that the glycosyl naringenin mixture was not added, to obtain a control sample.

### <Sensory Evaluation>

Four trained panelists were asked to consume test sample 15 containing the glycosyl naringenin mixture and a control sample not containing the glycosyl naringenin mixture, and then were allowed to freely comment on the sensations perceived from test sample 15 containing the glycosyl naringenin mixture, using the control sample as a reference. The results obtained are shown in Table 8.

**[Table 8]**

| | Comment |
|---|---|
| Test Sample 15 (Instant Vermicelli Soup) (Glycosyl Naringenin Conc. 5 ppm) | - The pepper-like pungency increased. |
| | - Had the impression that the flavor improved. |
| | - The impression of the flavor at the beginning became more pronounced, resulting in the perception of a richer and clearer flavor. |

As shown in Table 8, the panelist commented that the pungency perceived in the oral cavity was enhanced and the flavor was improved in test sample 15 containing the glycosyl naringenin mixture, compared to the control sample not containing the glycosyl naringenin mixture. This result is consistent with those obtained in Experiments 1 to 5, and indicates that glycosyl naringenin has the effect of enhancing various sensory attributes of culinary botanicals.

### Experiment 7: Effect of Glycosyl Naringenin on Enhancing Sensory Attributes of Culinary Botanicals in Food and Beverages (Curry Roux)

To further examine the effect of glycosyl naringenin on enhancing the sensory attributes of culinary botanicals in food and beverages, glycosyl naringenin was added during the preparation of curry using a commercially available curry roux containing culinary botanicals, and the effect on the sensory attributes of culinary botanicals in the resulting curry was evaluated.

### <Preparation of Samples>

Water in an amount of 500 g was boiled. Therein, 80 g of a commercially available curry roux (product name: Premium Juku Curry^{™}, manufactured by Ezaki Glico Co., Ltd.; containing curry powder, garlic paste, garlic powder, and culinary botanical extracts as ingredients) was added and dissolved. After adjusting the total weight to 580 g by adding boiling water, a glycosyl naringenin mixture (product name: NARINVID^{™}, manufactured by Hayashibara Co., Ltd.) containing 3"-α-monoglucosyl naringin and naringin was added such that the final concentration became 10 ppm, followed by stirring to obtain a curry as test sample 16. A curry was cooked in the same manner as described above, except that the glycosyl naringenin mixture was not added, to obtain a control sample.

### <Sensory Evaluation>

Seven trained panelists were asked to consume test sample 16 containing the glycosyl naringenin mixture and a control sample not containing the glycosyl naringenin mixture. Using the control sample as the reference, the panelists evaluated whether they perceived an enhanced sensation of "spice" "pungency," and "spiciness" in test sample 16 containing the glycosyl naringenin mixture. The results obtained are shown in Table 9.

**[Table 9]**

| | Evaluation Item | Number of Panelists who perceived an enhanced sensation in each evaluation items |
|---|---|---|
| Test Sample 16 (Curry) (Glycosyl Naringenin Conc. 10 ppm) | Spice | 5/7 |
| | Pungency | 6/7 |
| | Spiciness | 6/7 |

As shown in Table 9, for all evaluation items (i.e., "spice", "pungency" and "spiciness"), more than half of the panelists reported the enhanced sensation in the curry containing the glycosyl naringenin mixture. This result indicates the effect of glycosyl naringenin in enhancing the sensory attributes of culinary botanicals.

Below, examples of processed culinary botanicals, seasonings, foods and beverages in accordance with the present invention. However, the scope of the present invention is not limited by these examples.

### <Example 1: Processed Culinary Botanical>

An example formulation of a mixed spice for curry is shown below. This mixed spice may be used, for instance, as a raw material for curry roux as described later in Example 5:

| | |
|---|---|
| Cumin | 30% by mass |
| Coriander | 30% by mass |
| Cardamon | 10% by mass |
| Allspice | 5% by mass |
| Chilli pepper (Red pepper) | 10% by mass |
| Turmeric | 14.5% by mass |
| Glycosyl naringenin mixture (product name: NARINVID^{™}, manufactured by Hayashibara Co., Ltd.) | 0.5% by mass |

### <Example 2: Processed Culinary Botanical>

An example formulation of cinnamon powder is shown below. This cinnamon powder may be used, for instance, as an ingredient for chai, as described later in Example 6.

| | |
|---|---|
| Cinnamon powder | 99.7% by mass |
| Glycosyl naringenin mixture (product name: NARINVID^{™}, manufactured by Hayashibara Co., Ltd.) | 0.3% by mass |

### <Example 3: Seasoning>

An example formulation of a seasoning for raita is shown below. This seasoning may be used for the preparation of raita with enhanced pungency of cumin and black pepper, as described later in Example 7.

| | |
|---|---|
| Cumin | 40% by mass |
| Salt | 55% by mass |
| Black pepper | 4.9% by mass |
| Glycosyl naringenin mixture (product name: NARINVID^{™}, manufactured by Hayashibara Co., Ltd.) | 0.1% by mass |

### <Example 4: Seasoning>

An example formulation of a seasoning for achar is shown below. By adding chopped onions to this seasoning and maintaining it for 2 to 3 days, achar with a pleasant and rich pungency of cumin and red peppers can be prepared.

| | |
|---|---|
| Cumin | 2% by mass |
| Cayenne pepper (Red pepper) | 2% by mass |
| Olive oil | 20% by mass |
| Sugar | 15% by mass |
| Salt | 5% by mass |
| Glycosyl naringenin mixture (product name: NARINVID^{™}, manufactured by Hayashibara Co., Ltd.) | 0.002% by mass |
| Vinegar | Balance |

### <Example 5: Seasoning>

An example formulation of curry roux is shown below. Using this curry roux, one can easily prepare a curry with a pleasant and rich spice sensation characteristic of a curry mix, including the aroma and pungency characteristic of cumin and the spiciness of chili pepper.

| | |
|---|---|
| Beef tallow | 35% by mass |
| Wheat flour | 20% by mass |
| Processed Culinary Botanical described in Example 1 | 10% by mass |
| Onion powder | 5% by mass |
| Sugar | 11% by mass |
| Salt | 5% by mass |
| Cornstarch | 8% by mass |
| Caramel | 2% by mass |
| Beef Extract | 2% by mass |
| Veetable Extract | 2% by mass |

### <Example 6: Food or Beverage Product>

An example formulation of chai is shown below. This chai offers the sweet aroma and sharp pungency characteristic of cinnamon.

| | |
|---|---|
| Black tea | 150mL |
| Hot milk | 150mL |
| Processed Culinary Botanical described in Example 2 | 1g |
| Sugar | 10g |

### <Example 7: Food or Beverage Product>

An example formulation of raita is shown below. This raita offers the aroma and pungency characteristic of cumin and black pepper.

| | |
|---|---|
| Yogurt | 200g |
| Cucumber | 100g |
| Tomato | 50g |
| Seasoning described in Example 3 | 2g |

### <Example 8: Food or Beverage Product>

An example formulation of curry is shown below. This curry offers the pleasant and rich spice sensation characteristic of a curry mix, including the aroma and pungency characteristic of cumin and the spiciness of chili pepper.

| | |
|---|---|
| Hot water | 600g |
| Carrot | 100g |
| Onion | 400g |
| Pork | 200g |
| Vegetable oil | 10g |
| Seasoning described in Example 3 | 100g |

### Industrial Applicability

In accordance with the present invention, the sensory attributes of culinary botanical can be enhanced, thereby improving the palatability of foods and beverages containing culinary botanicals. Furthermore, in accordance with the present invention, which can enhance the sensory attributes of culinary botanicals, sufficient perception of these attributes can be achieved with smaller amounts of culinary botanicals than conventionally required, allowing for the reduction of raw material costs without compromising sensory quality. Thus, the present invention has significant industrial applicability.

## Claims

1. An agent for enhancing a sensory attribute of a culinary botanical, comprising a glycosyl naringenin.

2. The agent according to claim 1, which comprises glucosyl naringin as the glycosyl naringenin.

3. The agent according to claim 2, which comprises glucosyl naringin and naringin as the glycosyl naringenin.

4. The agent according to claim 3, which comprises glucosyl naringin and naringin in a mass ratio of 90:10 to 50:50.

5. The agent according to claim 4, which is used such that the concentration of glycosyl naringenin at the time of consumption is less than 100ppm.

6. The agent according to any one of claims 1 to 5, wherein enhancing a sensory attribute of a culinary botanical is increasing the intensity and/or improving the persistence of pungency and/or spiciness of the culinary botanical.

7. A method for enhancing a sensory attribute of a culinary botanical in a food or beverage product and/or a seasoning, comprising a step of bringing the agent according to any one of claims 1 to 5 into coexistence with the food or beverage product and/or seasoning comprising a culinary botanical ingredient.

8. A processed culinary botanical, comprising a culinary botanical ingredient and a glycosyl naringenin.

9. The processed culinary botanical according to claim 8, which comprises glucosyl naringin as the glycosyl naringenin.

10. The processed culinary botanical according to claim 9, which comprises glucosyl naringin and naringin as the glycosyl naringenin.

11. The processed culinary botanical according to claim 10, which comprises glucosyl naringin and naringin in a mass ratio of 90:10 to 50:50.

12. The processed culinary botanical according to any one of claims 8 to 11, which is used such that the concentration of glycosyl naringenin at the time of consumption is less than 100 ppm.

13. A seasoning having a sensory attribute of a culinary botanical, comprising a culinary botanical ingredient and a glycosyl naringenin.

14. The seasoning according to claim 13, which comprises glucosyl naringin as the glycosyl naringenin.

15. The seasoning according to claim 14, which comprises glucosyl naringin and naringin as the glycosyl naringenin.

16. The seasoning according to claim 15, which comprises glucosyl naringin and naringin in a mass ratio of 90:10 to 50:50.

17. The seasoning according to any one of claims 13 to 17, which is used such that the concentration of the glycosyl naringenin at the time of consumption is less than 100 ppm.

18. A food or beverage product having a sensory attribute of a culinary botanical, comprising a culinary botanical ingredient and a glycosyl naringenin.

19. The food or beverage product according to claim 18, which comprises glucosyl naringin as the glycosyl naringenin.

20. The food or beverage product according to claim 19, which comprises glucosyl naringin and naringin as the glycosyl naringenin.

21. The food or beverage product according to claim 20, which comprises glucosyl naringin and naringin in a mass ratio of 90:10 to 50:50.

22. The food or beverage product according to any one of claims 18 to 21, wherein the concentration of glycosyl naringenin in the food and beverage is less than 100 ppm.
